# EUROPEAN PATENT SPECIFICATION

(11) **EP 2 624 238 B1**
(45) Date of publication and mention of the grant of the patent: **22.04.2020**
(21) Application number: 12380006.2
(22) Date of filing: 02.02.2012
(51) Int. Cl.: G09B 9/02, G09B 9/46, G09B 9/30, G06F 3/01

(54) **Virtual mock up with haptic hand held aid**
Virtuelles Simulationsmodell mit tragbarer haptischer Hilfe
Maquette virtuelle avec aide portable haptique

(43) Date of publication of application: 07.08.2013
(73) Proprietor: Airbus Helicopters España Sociedad Anonima, Albacete (ES)
(72) Inventor: Ciudad Ceprian, Oscar, 02004 Albacete (ES); Martinez Muñoz, Jonathan, 02006 Albacete (ES); Lopez Sanchez, Antonio José, 02003 Albacete (ES); Garcia Jiménez, Arturo Simon, 02008 Albacete (ES); Molina Masso, José Pascual, 02004 Albacete (ES); Gonzalez Lopez, Pascual, 02002 Albacete (ES)
(74) Representative: GPI & Associés

(56) References cited:
- MATHIAS MOEHRING ET AL: "Effective manipulation of virtual objects within arm's reach", VIRTUAL REALITY CONFERENCE (VR), 2011 IEEE, IEEE, 19 March 2011 (2011-03-19), pages 131-138, XP031863526, DOI: 10.1109/VR.2011.5759451 ISBN: 978-1-4577-0039-2
- DIPIETRO L ET AL: "A Survey of Glove-Based Systems and Their Applications", IEEE TRANSACTIONS ON SYSTEMS, MAN, AND CYBERNETICS: PART C:APPLICATIONS AND REVIEWS, IEEE SERVICE CENTER, PISCATAWAY, NJ, US, vol. 38, no. 4, 1 July 2008 (2008-07-01), pages 461-482, XP011345991, ISSN: 1094-6977, DOI: 10.1109/TSMCC.2008.923862

## Description

### Field of the invention

The invention relates to the general technical domain of computing.

The invention also relates to the technical domain of sensitive and interactive simulation arrangements also called interface arrangements. Such interface arrangements are e.g. for transferring input data to be processed from the arrangement into a form capable of being handled by a computer, as well as output data to be transferred from a computer processing unit to said arrangement.

For instance such interactive simulation data transfer arrangements comprise at least one hand-worn input/output arrangement, e.g. a data glove with integrated sensing / feed-back appliances.

These techniques are to be applied in relation with Human-Machine Interfaces (HMI), e.g. dedicated to aircrafts such as rotary wing aircrafts.

The invention applies favorably to computer aided simulators for control, teaching or training purposes, e.g. for teaching control of vehicles based upon a sensitive and interactive simulation of relevant parts of these vehicles.

Typically, the invention concerns aircraft control simulation, for designing, testing, (actual on-board / remote) piloting and maintenance purposes.

### Background of the invention

The document XP031863526 "Effective manipulation of virtual objects within arm reach" is regarded as the art corresponding to the preamble portion of the main claim. For replicating a HMI in an automotive vehicle, it includes a glove with a pinch detection, a finger tracking system and a tactile feedback system.

The document XP011345991 "A survey of glove-based systems and their application describes various hand movement data acquisition applications.

Some other background is available about interactive simulation data transfer arrangements.

As of hand-worn arrangements, some background distinguished between added skeleton appliances arrangements and integrated arrangements. With added skeleton appliances arrangements, a series of added sensing / feed-back appliances are in an external skeleton which is coupled outside the arrangement. Although practical e.g. for animation movies automated production, such arrangements are bulky, heavy and expensive.

As of the integrated arrangements, they include a limited series of sensing / feed-back appliances, directly onto the arrangement. Such integrated arrangements are sometimes used for aircraft control simulation. Present technologies only provide for rather limited panel of control sequences, quite imprecise selection of simulated objects and also rather confusing feeling by the Human user, mainly when simulation visual display is operated through a (desktop or Netbook) computer. Besides, known integrated arrangement offers quite poor control sequences as well as uncertain feed back signals.

An example of such an integrated arrangement, called PhaseSpace IMPULSE Glove, is presented in the Datasheet at: http://www.phasespace.com/gloves.html.

This IMPULSE Glove comes with eight LEDs: one the tips of the fingers (two LEDs on the thumb), and two LEDs on the back of the hand. This glove is also available with infrared LEDs. The glove is connected to a multi-LED board.

Document US6324296 generally relates to technical details dedicated to the above integrated arrangement.

Another example of such an integrated arrangement called Pinch Gloves and proposed by Fakespace Labs, is presented in the Datasheet at: http://www.inition.co.uk/sites/default/files/vrgloves fakespace pinc h%5B1%5D.pdf

The Pinch Gloves are made with cloth and equipped with electrical sensors in each fingertip. Contact between any two or more digits completes a conductive path, and a complex variety of actions based on these simple "pinch" gestures can be programmed into applications.

Still another example of such an integrated arrangement called CyberTouch Glove and proposed by Cyber Glove Systems, is presented in the Datasheet at: http://www.cyberglovesystems.com/sites/default/files/CyberTouch Brochure 2009.pdf

A tactile feedback option is available for the Cyber Touch wired and instrumented glove. It features small vibro-tactile stimulators on each finger and on the palm of the glove. Each stimulator can be individually programmed to vary the strength of touch sensation.

Document US5320538 describes a finger sensing glove in which individual movements of and pressures exerted by individual fingers on a hand are detected within the framework of a virtual cockpit simulator.

Document WO2004109487 describes a mission control system having an operator seat; a head-mounted display and digital gloves worn by the operator; a headset having a microphone and integrated in the head-mounted display; a tracker for tracking the movements of the head-mounted display and the digital gloves; and a mission computer housed in the operator seat and connected to the head-mounted display, to the digital gloves, to the headset, to the microphone, and to the tracker, to allow the operator to impart gestural commands by means of the digital gloves, and voice commands by means of the microphone, and to receive visual information by means of the head-mounted display, and audio information by means of the headset. This document describes digital gloves used to simulate conventional tracker, such as a mouse or trackball.

Document US20110004074 describes an apparatus comprising: a multi-finger glove, elastomeric sleeves position in fingers of the glove, physiological sensors carried in fingers of the glove, adjacent to an end thereof. The sensor is selected from a class which includes: pulse dosimeter, thermal sensor, blood pressure sensor and pulse rate sensor. The apparatus includes a transmitter carried by the glove, coupled to the sensor by a fiber optic link. The sensor is attached to an end of the sleeve. A displaced monitoring unit is in wireless communication with the transmitter.

Document TW200952352 describes a remote-control method using hand gesture. A remote-control device is arranged in a glove and a remote-control device includes a bend sensor, a tilt indicator, a processing unit and a transmitter. By using this method, converting a specific gesture to a variation of specific remote-control signal integrates a variety of remote controllers, possibly with control of multiple devices with one hand.

Document US2011071709 describes a mock-up with electrical exchanges relating to analog and/or discrete signals that are simulated. For the digital models, their level of representativity is such that they can be mixed via an interface card with real pieces of equipment. Several pieces of equipment and / or components including partitions as per ARINC653 protocol may be simulated.

Document WO2008052094 describes an active man-machine interface that is implemented without a force detector, but with a neutral position detector and with a signal being produced that is representative of said position. That document thus attempts to give feedback to the pilot that reproduces a feeling informing the pilot of the stresses applied at any given moment to the control members the pilot is using.

Now that those disclosures have been stated, are set out the various technical problems to which the invention proposes technical solutions.

From the above, it can be understood that in the area of Virtual Reality involving instructions / sensitive systems (e.g. gloves, motion trackers and head mounted displays) complex, bulky and expensive means are required at present, to provide a rich user experience when simulating a complex Human Machine Interface (HMI), such those of helicopter cockpits. Such a HMI is involving a great number of simulated buttons, knobs, handles, pedals and switches (designated as simulated objects and also referred to as "widgets").

Such 3D Virtual HMIs, for instance a simulator mock up virtually replicating a vehicle control station (e.g. aircraft cockpit) are getting more and more useful, allowing an human operator (e.g. the vehicle end user and / or engineer designer) to interact with virtual equipments and dashboard simulated objects, as in a real physical vehicle.

This allows performing trainings, tests and other engineering tasks without the need to use a real and expensive physical vehicle or dedicated standalone station (e.g. a cockpit mock up).

Some tasks which were not possible with a real vehicle / mock up, are now are available with a virtual one, as early check of designs for future vehicles.

Although, it remains not so easy and economically acceptable to give users of a Virtual Reality Vehicle, the capability to interact with all virtual HMIs (actions performed with a combination of fingers on switches, knobs and buttons) with no operational restrictions and intuitive enough, without requiring specific training environment.

For instance, in dedicated standalone stations like cockpit mock ups or movie capture studios, the human operator is facing a more than human size wall-like visual display, where the resolution detail is high, the available screen surface is very extended, and thus allowing for side insertions (possibly via supplemental side displays). Some virtual simulators require such consistent equipment to work properly. Therefore, reduced size screen like laptop / desktop visual displays are not convenient for such simulators.

In some environment conditions, e.g. a emergency, military or humanitarian campaign, virtual reality sessions taking place remote from any dedicated premises, would be sometimes most helpful, e.g. by allowing training and test of (upgraded / presently occupied) real HMIs / vehicles, through replicated ones. In such a purpose, a virtual simulator mainly composed of an off-the-shelf computer (laptop / desktop / Tablet) to which a reduced number of light / compact instructions and feed back equipments (e.g. a mere pair of connected cloth gloves plus a phonic head-set including commercial headphones plus microphones), would be greatly beneficial.

User interaction in a real cockpit is obtained by the user pushing, pulling, moving or turning the different HMI switches. In a virtual environment the same effect can be obtained by detecting collision of the user fingers with the different widgets. But the feeling and reality of actions this way is not accurate, non ergonomic, somewhat limited and not so close to reality.

The goal of the invention is to let a user interface easily with very complex and dense HMI, such as last generation helicopters cockpits, consisting on hundreds of switches, very close to each other. In environments such as this, a good interaction has not been reached yet e.g. for the following reasons:
- Not enough resolution in virtual HMI displays to read dashboard content,
- Lack of precision for operations,
- Ergonomic problems and anxious user when trying to maintain a certain realistic position or perform accurate movements.

Given that, there are unavoidable physical constraints such as the lack of a real object to rest fingers on (involving physical fatigue to the human operator), while the use of easy to understand interaction metaphors and techniques that help user to overcome this limitations is vital.

For this purpose, the invention proposes novel and non evident features forming useful solutions to the above problems, as well as beneficial enhancements to nowadays techniques.

### Summary of the invention

In one aspect, the invention provides a method of operating an aircraft simulator mock up virtually replicating a human-machine interface (HMI) in a vehicle according to claim 1. Said aircraft simulator mock up including a computer with a processor, a non-transitory computer-readable medium containing computer-commands, said computer-commands, when executed, causes the processor of the computer to automatically perform operations replicating said human-machine interface. Besides, an instructions / sensitive feed back system is functionally coupled with at least one body organ of a human operator of the simulator mock up, and also coupled with said computer, so as to collect from the human operator sensitive inputs for the simulator mock up and also so as to indicate operating information of the simulator mock up to said human operator.

In an embodiment, the invention provides for an aircraft simulator mock up virtually replicating a human-machine interface (HMI) in an airborne vehicle, in particular a rotary wing aircraft, according to claim 12.

The invention is defined in the appended claims.

### Brief description of the drawings

The invention and its advantages appear in greater detail in the following description of embodiments given by way of illustration and with reference to the accompanying figures, in which:

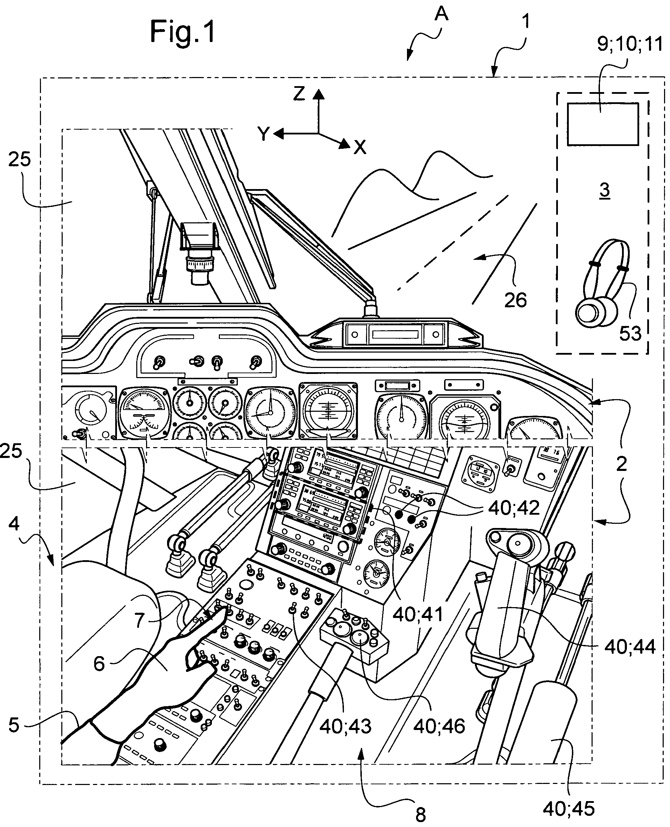

- Figure 1 is a schematic perspective part view of a simulator mock up virtually replicating a human-machine interface in a vehicle, said simulator mock up including at least: the simulator mock up hardware group, a replicated HMI of a helicopter (windshield, dashboard, pedals, levers, environment, etc.), a piloting computer (with processor, memory, software, etc.), a series of elements in an instructions / sensitive feed back system (including visual displays, a headset tracker element and hand wearable glove or gloves, etc.), a human operator avatar displayed by the simulator, a plurality of virtual objects to be manipulated.

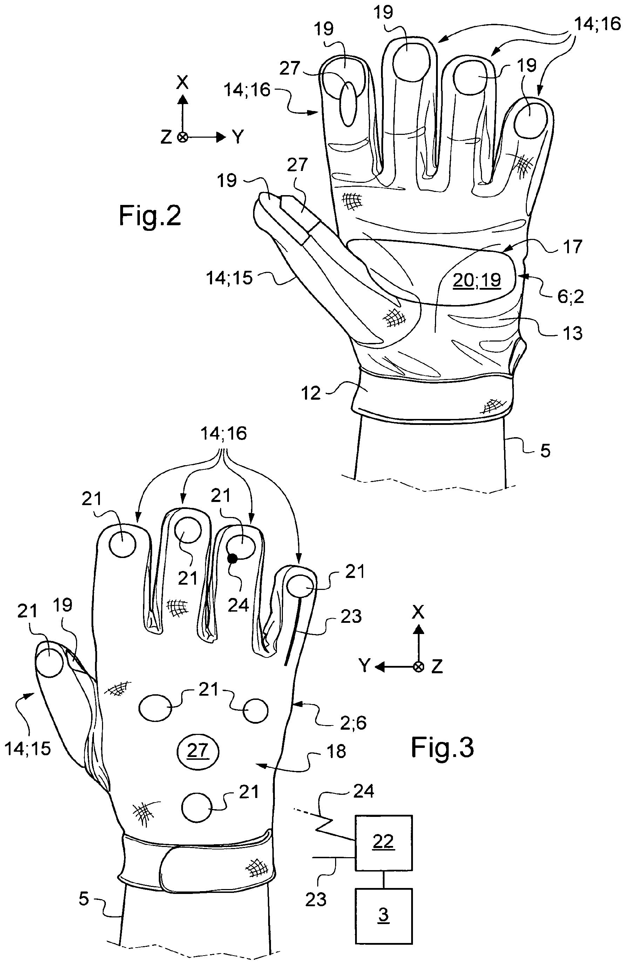

- Figure 2 is a palm side upright view of a and wearable glove according to the invention, this glove including a series of interaction task sensors as well as a plurality of haptic feed back components, upon palm side of finger sleeves and / or upon the palm portion;
- Figure 3 is a backside upright view of a and wearable glove similar to the one of figure 2, from dorsal side, this glove including a series of haptic feed back components and of 3D overall motion detection means, upon palm backside portions and backside of finger sleeves.

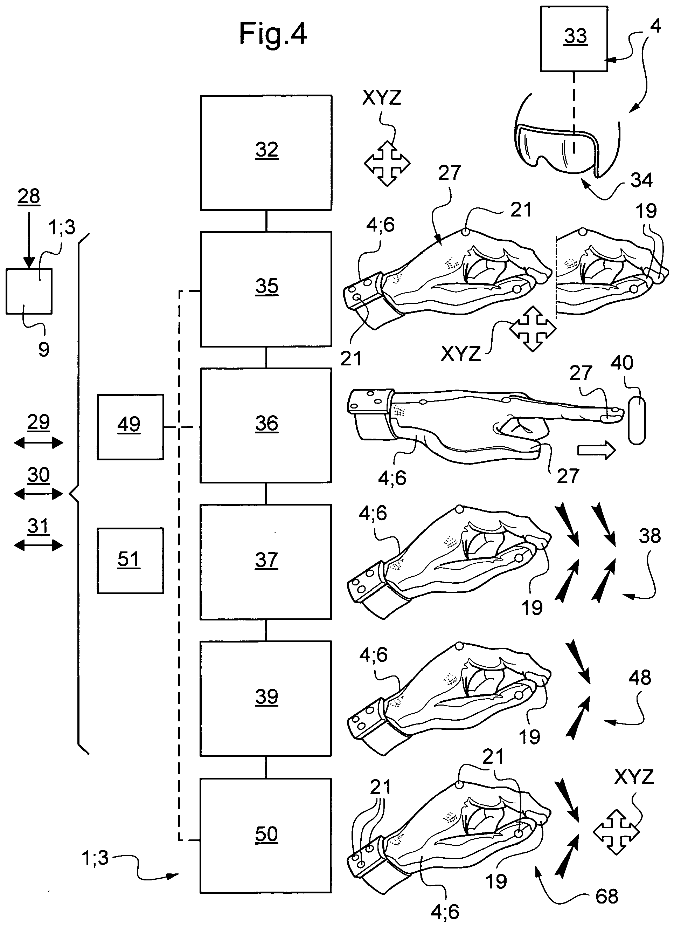

- Figure 4 is a logical process flowchart partly illustrating operation of a method according to the invention, this flowchart including interaction tasks of: looking around via a head tracking monitored through a headset detector, magnifying a selected portion (e.g. a whole panel / a pop-out widget) via a combined touch pre-selection plus a pinch confirmation plus a 3D pulling action, pre-selecting a virtual / simulated object via touch action, confirm : turn off magnification via multiple pinch gesture; select : de-select via a unique pinch gesture, toggle a witch via a thumb-index pinch gesture combined with an overall glove motion.

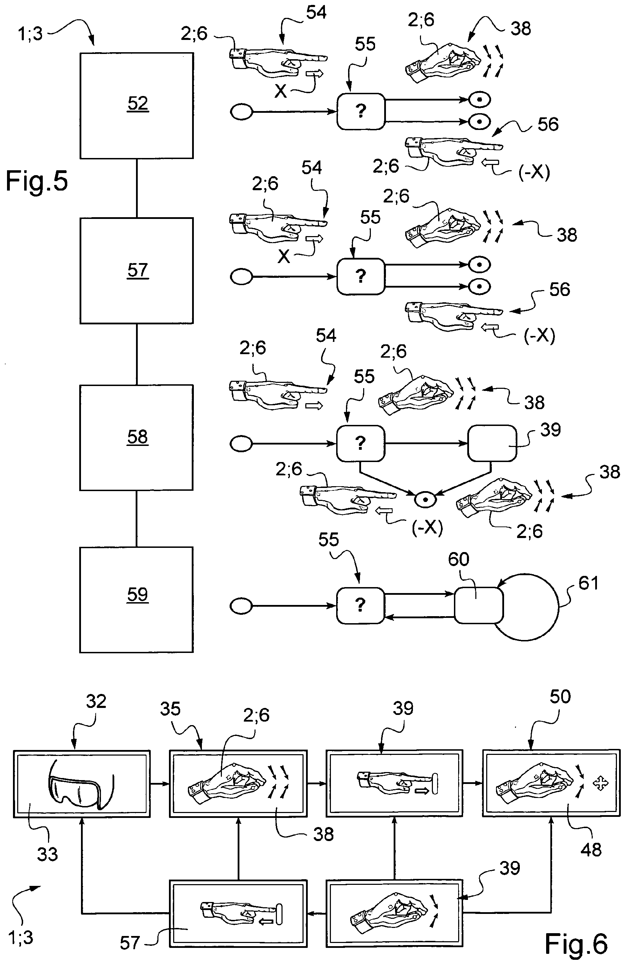

- Figure 5 is a logical process flowchart partly illustrating operation of a method according to the invention, this flowchart including interaction techniques of: a status diagram for pop-out widgets, status diagram for turn-off actions, status diagram for touch and pinch selection / de-selection and a status diagram for low fidelity manipulation (handling) interaction; and,
- Figure 6 is a logical process flowchart partly illustrating operation of a method according to the invention, this flowchart including interaction tasks sequences of: looking around, magnifying, selecting a panel / widget, manipulated this widget, de-selecting this widget and turning-off magnification.

### More detailed description

A vehicle A is referred to on figure 1. This vehicle A is an aircraft in the examples, and is in fact only partly represented, via a simulator mock up 1.

Such a simulator mock up 1 is e.g. dedicated to so-called "Virtual Cockpit Procedures Trainers" (VCPT) available for rotary wing aircrafts A, in order to enhance, update & practice users of such aircrafts.

For instance, training Services in the aircraft industry, need Virtual Cockpit Procedures Trainer (VCPT). A Virtual Cockpit Procedures Trainer (VCPT) comprises training software (plus hardware) which is designed to virtually put Human operators 5 (or "users") sometimes called "trainees" in the virtual cockpit (Human Machine Interface or HMI : referenced 2) of the aircraft A and to test their skills with simulated real-life, 3D (three dimensional) images.

E.g. by using emergency procedures directly taken from the official Flight Manual, a VCPT displays a fully-operational, realistic cockpit in a 3D environment and requires at least one Human operator 5 to interact by following practical lessons in three different modes: tutorial, training and test.

For example, the Human operator 5 can first follow a guided lesson format in which the VCPT will show the correct way to perform certain actions and provide explanations for dealing with the emergency procedure. The training process then allows for revision before a final exam, where no automated help is provided and the Human operator 5 must pass the test using the skills acquired. This test mode enables pilots to review the Human operator 5 knowledge of procedures before a flight and/or simulator sessions.

The VCPT also offers Human operators 5 as chief pilots or managers the possibility to verify their trainees' knowledge on emergency procedures and keep track of test records.

From figure 1, it appears that a simulator mock up 1 forming a VCPT is delivered on a computer 3 (e.g. Desktop, Netbook Laptop or tablet), with the software 9 loaded on a memory (nonvolatile computer readable medium) 10 and in a processor 11 so as to be ready to run.

The whole mock up 1 also comprises one or a plurality of visual display(s) elements, referenced 8.

In figures 1-5, are represented three mutually orthogonal directions X, Y, and Z. These three mutually orthogonal directions X, Y, and Z represent a so-called static 3D landmark XYZ.

For instance, a "longitudinal" direction X corresponds to the lengths or main dimensions of the structures / movements which are described. Considering an aircraft A, the main component of the flight path speed or of the forward thrust extends in this direction X. In aviation, this direction X generally corresponds to the roll axis.

Another direction, a "transverse" direction Y corresponds to the widths or lateral dimensions of the structures / movements described. The longitudinal direction X and the transverse direction Y are sometimes said to be horizontal, for simplification purposes. It is also relative to this direction Y that the terms "left" and "right" are defined.

A third direction Z is said to be an elevation direction and corresponds to the height dimensions of the structures / movements described: the terms up/down are relative thereto. Sometimes, this elevation direction Z is said to be vertical. In aviation, this elevation direction Z generally corresponds to the yaw axis of an aircraft A.

The simulator mock up 1 is in fact virtually replicating a human-machine interface (HMI) in a vehicle A.

In brief, said computer 3 has a non-transitory computer-readable medium 10 containing computer-commands of software 9. For automatically performing operations replicating a real human-machine interface HMI, said computer-commands of software 9 are executed via the processor 11. When replicated by the simulator mock up 1, the HMI is referenced 2.

Besides, the simulator mock up 1 comprises one or a plurality of instructions / sensitive feed back system(s) 4. Such an instructions / sensitive feed back system 4 is including a plurality of interactive elements (to be describes hereinafter), functionally coupled with at least one body organ (e.g. an arm and hand) of a human operator 5. Some of these interactive elements are physically worn or sensitively perceived by the Human Operator 5.

This interactive element of the instructions / sensitive feed back system 4 is also coupled with said computer 3, so as to collect from the human operator 5 sensitive inputs for the simulator mock up 1 and also so as to indicate operating information (called feed back) of the simulator mock up 1 to said human operator 5.

Said instructions / sensitive feed back system is equipped with, i.e. comprises, one (or a plurality of) hand wearable glove(s) 6. Obviously, this glove 6 (or a pair of) is (are) worn by the Human Operator 5.

In this purpose, such a glove 6 is a soft structure, e.g. made of pieces of cloth or the like. Such a soft cloth-like structure is to be distinguished from expensive, bulky and heavy so-called skeleton-gloves, made of rigid outer branches, articulated the ones with the other and affixed to a soft protective glove so as to be controlled through hand movements. In figure 2 and 3, the glove 6 comprise from bottom to top:
- a wrist portion 12,
- a palm portion 13,
- from two to five finger sleeves 14, among which are:
- a thumb finger sleeve 15, and,
- from one to four opposed finger sleeves 16.

The hand wearable glove 6 comprises two sides, one (shown on figure 2) being a palm side 17, the other (shown on figure 3) being a dorsal (rear or back) side 18.

As seen from figures 2 and 3, the glove 6 of the invention is also equipped with interaction task sensors 19-20, also called finger / goal pads.

From figures 2 and 3, it is seen that these interaction task sensors 19 are mostly located upon the palm side 17. These interaction task sensors 19 are integrated to the glove 6, i.e. are closely attached or merged with the soft structure (cloth like) of the glove 6.

For instance, such interaction task sensors 19 are local areas knitted from (electrically) conductive wire, printed patches of conductive material, glued (soft) stamps with a conductive upper layer, sewed (soft) stamps with a conductive upper layer, or attached to the cloth-like structure of the glove 6.

Other way speaking, unlike the skeleton added outer structures, the inventions proposes a glove 6 where the various elements acting for the instructions / sensitive feed back system 4, are generally flush with the cloth-like structure of the glove 6, with no major protuberances.

These various elements of the instructions / sensitive feed back system 4 are either structured as:
- merged with the cloth-like structure of the glove 6 (e.g. when conductive knitted wire forms some of these elements), and / or,
- thin and soft enough to only slightly overlap from the cloth-like structure of the glove 6 (e.g. when printed patches and / or bonded stamps are attached for instance in a dedicated hollow portion of complementary shape of the cloth-like structure of the glove 6), and / or,
- solid and thin elements, stiff and small enough to at most slightly overlap from the cloth-like structure of the glove 6.

Usually, these elements integrated to the glove 6 are flush with the cloth-like structure of the glove 6.

Besides, locations on the glove 6 of these various elements of the instructions / sensitive feed back system 4 are predetermined not only taking into account the final function they assume, but also balancing this with ergonomic and comfort requirements.

For instance, some predetermined elements of the instructions / sensitive feed back system 4 are e.g. integrated on the dorsal side 18 of the glove 6, thus keeping out of the palm side 17 other such elements.

From figure 2, is seen an embodiment of the interaction task sensors 19, integrated on the palm side 17 and located remote from the various finger sleeves 14, i.e. inside a central palm facing portion 20 of the glove 6. This interaction task sensors 19 in the central palm facing portion 20 is generally oval shaped with the small oval dimension relatively along the X direction while the large oval dimension is along the relatively along the Y direction.

This allows for smooth and comfortable bending of the finger sleeves 14 towards the central palm facing portion 20, with minimal stress resistance / rigidity opposed by these bending movements.

Owing that, the whole glove 6 is compact and easy to transport, smooth and comfortable to carry, while reaching an unforeseen accuracy in functions with a production low cost.

From figure 3, are seen some elements of the instructions / sensitive feed back system 4 functioning as 3D overall motion detection means 21. In this example, each of these 3D overall motion detection means 21 comprise a LED arrangement, emitting at a predetermined spectrum and intensity, and functionally coupled with a compatible receiver 22 logically connected to the computer 3, thus sensing the instant position relatively the static 3D landmark XYZ of these means 21.

From the instant position of these means 21 with respect to the static 3D landmark XYZ, the actual / present effective location of the glove 6 relatively to this static 3D landmark XYZ is calculated by the computer 3.

Depending on embodiments of the invention, these 3D overall motion detection means 21 are functionally coupled with a compatible receiver 22, for data communication / electric supply, via:
- an electrically conductive wire web 23, e.g. partly integrated into the cloth-like structure of the glove 6; and / or,
- a wireless transponder emitter / receiver 24, e.g. partly integrated into the cloth-like structure of the glove 6.

In embodiments of the invention, the electrical current supply of the elements of the instructions / sensitive feed back system 4 integrated to the glove 6, is e.g. operated via:
. the electrically conductive wire web 23 which is connected to a power source: this source is remote from glove 6 (possibly a USB hub of the computer 3 or the like) and / or secured to the system 2 like cell batteries and / or photovoltaic cells); and / or,
. the wireless transponder emitter / receiver 24, thanks to radiofrequency energy production.

These data communication / electric supply solutions, as well as others available to the skilled man in the arts, applies equally to most of the invention's elements of the instructions / sensitive feed back system 4 of the glove 6, regardless their functions and technologies.

Now considering a reference plan XY formed by the directions X and Y, various spatial distributions of these means 21 are illustrated.

As seen in the example of figure 3, these 3D overall motion detection means 21 are located and integrated on the (back) dorsal side 18 of the glove 6, relatively flush with the cloth-like structure.

Figure 3 shows a plurality of 3D overall motion detection means 21 integrated e.g. about tip ends of predetermined finger sleeves 14, on dorsal side 18. Embodiments of the invention only provide for two or three 3D overall motion detection means 21 on finger sleeves 14, e.g. on thumb, index and / or small (pinky) fingers.

Other embodiments of the invention provide for up to four or five 3D overall motion detection means 21 on finger sleeves 14, e.g. on thumb, index and / or middle and /or ring and /or small fingers.

Besides, the embodiment of figure 3 and 4 shows additional 3D overall motion detection means 21, to the ones on finger sleeves 14.

On figure 3, three such means 21 are disposed about the center of the dorsal side 18.

These additional 3D overall motion detection means 21 are generally forming an isosceles triangle. The barycenter of this triangle is neighboring / directed towards the center of the dorsal side 18, a proximal angle is somewhat facing the wrist portion of the dorsal side 18 and an opposed border sensibly parallel to the direction Y while at a location about the one of a middle of the thumb finger sleeve 15.

On figure 4, four of such means 21 are disposed remote from the center of the dorsal side 18. On a wrist portion of the glove 6, three additional 3D overall motion detection means 21 are generally forming an isosceles triangle. Close to the location of the articulation between the index-small finger sleeves 16, other 3D overall motion detection means 21 are integrated to the cloth-like structure of the dorsal side 18.

Other distributions of the 3D overall motion detection means 21 are embodied by the invention, as well as various quantities of elements in the means 21 among the system 4 of a given glove 6.

Since the simulator mock up 1 also includes one or a plurality of visual display 8 .e.g screen(s) 25 (figure 1) able to show simulated objects including an image of the glove 6. In parallel of the replicated human-machine interface 2 (HMI) as well as a virtual environment 26 such as landing / flying surroundings of the aircraft A), this allows some actable simulated objects 40 to be virtually manipulated via the hand wearable glove 6 during operating of the simulator mock up 1. During this operating, the means 21 allows for the overall 3D location of the glove 6, relative to the static 3D landmark XYZ, to be refreshed and displayed on screens 25.

Although the simulator mock up 1 is compatible with any kind of visual display, including wall-like ones as per in standalone dedicated stations, the invention makes it agreeable and precise the use of smaller screens 25, e.g as those of from the shelf commercial computers 3, even portable / hand-held ones.

According to the invention, besides the 3D overall motion detection means 21 and the "sleeve pad / goal pad" of interaction task sensors 19, a plurality of haptic feed back components 27 are integrated to the glove 6. The meaning of the term "integrated" is similar concerning the haptic feed back components 27 and the means 21 or sensors 19 (see above). As of the data communication / electric supply, the solutions applying to these sensors 19 and means 21 are also applied to the haptic feed back components 27.

In figure 2, the palm side 17 of the glove 6 is equipped with two haptic feed back components 27. One of these components 27 is flush with the thumb finger sleeve 14, 15, about the tip end of the later. Another of these components 27 is flush with the index finger sleeve 14, 16, about the tip end of the later.

From the structural standpoint, such haptic feed back components 27 are of the group including: micro motor, nano object or MEM, and the like. Such components 27 are for instance sandwiched between two layers of a cloth-like structure of the glove 6 or merely outside flushed with.

Before explaining in more details the way that the invention works, it is understood that the thumb plus index haptic feed back components 27 provide tactile vibrations, to be felt by the Human Operator 5.

Such tactile vibrations are to be understood by this Human Operator 5, e.g. like a confirmation message. It is known to induce haptic feed back reflecting a touching contact, e.g. in video games joysticks.

The invention provides a new and useful application of tactile feed back for translating the fact that a given stage / step / action on an element and / or series of elements (like virtual replication of a panel in a vehicle dashboard) is activated, despite the fact that the virtual image of the glove 6 is remote from this element and / or series of elements (called simulated objects). For instance, as long as a simulated object of the mock up 1 is "on" or "available" or "pre-selected", a tactile haptic feed back is operated by one or a plurality of haptic feed back components 27.

Besides, the operation of such haptic feed back components 27 is combined with those of other elements of the system 4, in a new and useful manner.

First of these functions operated by said haptic feed back components 27 is of allowing the hand wearable glove 6 to reflect towards the Human Operator 5 a haptic feed back tactile vibration, e.g. when occurs a physical touch-up between at least two sleeve pad(s) / goal pad(s).

In the HMI 2, are various simulated objects generally referenced 40 (figure 1) : among these simulated objects 40, are a whole panel 41, buttons 42, knobs 43, handles 44, pedals 45, switches 46 and the like).

Now, examples of the overall working process of the invention are detailed.

Generally speaking, the method according to the invention automatically performs the following operations (named after the corresponding material structures, whenever), based upon computer-commands 29, said computer-commands 29, when executed, causes the processor 11 and software 9 to automatically operate so as to replicate said human-machine interface 2 (HMI).

These operations makes available, at least:
- a 3D overall motion detecting stage 21, wherein an overall 3D location sensitive input 29 reflects an instant position of the whole wearable glove 6, said overall 3D location sensitive input 29 being provided to the computer 3, thanks to the instructions / sensitive feed back system 4 which includes said 3D overall motion detection means 21, arranged flush the glove 6 to track movements of said glove 6 relatively to the static 3D landmark,
- a finger-to-goal interaction stage 19, wherein a finger-to-goal sensitive contact input 30 reflects a recent physical touch-up between at least a contacting finger sleeve pad (19) with a goal pad (19, 20), thanks to said contacting finger sleeve(s) / goal pads 19-20 each acting as an interaction task sensor integrated to the glove 6, and,
- a dedicated haptic feed back stage 27, wherein a recent physical touch-up between at least contacted finger sleeves pad / goal pad (19-20) is reflected by a haptic feed back tactile vibration input 31, at a corresponding portion of the glove 6 located by the finger sleeve / goal pad(s) 19-20, thanks to at least one of said two contacting finger sleeves 14-16 (plus the palm portion 13) having integrated therein an haptic feed back component also referenced 27.

Unlike in video-games or the like, the invention operates a dedicated haptic feed back stage 27, not only when starts a recent physical touch-up, or as long as a virtual element of a instructions / sensitive feed back system 4 is maintained pointing a given simulated object, but more broadly for preselected "recent" physical touch-up. For instance, as long as a simulated object 40 of the mock up 1 is "on" or "available" or "pre-selected", a tactile haptic feed back stage 27 is operated.

In figure 4, is a logical process flowchart is partly illustrating operation of a method according to the invention. This flowchart includes interaction tasks of:
• looking around task 32: the looking around task 32 is operated via a head tracking wearable device 34 (.e.g goggles) which is an element of system 4, and is monitored through a remote headset detector 33 (also belonging to the system 4, and installed, e.g. via a USB hub by connection to the computer 3),
• magnifying task 35: the magnifying task 35 is resulting from selecting a given object 40 (e.g. a whole panel 41 / a pop-out widget 40; 42-45), e.g. via a combined:
.. touch pre-selection (virtual location matching, deduced from stage 21) followed by :
.. a pinch confirmation (stage 19) followed by
.. a 3D pulling / manipulating action (stage 21),
. pre-selecting task 36: the pre-selecting task 36 is operated when a simulated object 40 is pre-selected via touch action,
. confirm previous action task 37: the confirm previous action task 37 is operated in order to e.g. turn off magnification, and is instructed via a multiple pinch gesture 38,
. select / de-select task 39: the select / de-select task 39 is operated via a unique pinch gesture 48,
. "manipulate an object" task 50, e.g. toggle a witch task: toggle a witch task 50 is operated as per reference 48, via a (thumb-index) unique pinch gesture, combined with an overall glove motion 68 (stage 21). Based upon the above and figure 4, details upon some interaction techniques of the invention are described. Below, Table 1 and Table 2 sum up the proposed interaction, matching the interaction tasks with their respective interaction techniques, and virtual actions with the real ones.

**Table 1: Interaction tasks (and corresponding interaction techniques).**

| Interaction Task | Interaction Technique |
|---|---|
| Look around | Head tracking 32 |
| Magnify | Pop-out widgets 35 |
| Turn off magnification | Turn off action 39 |
| Selection | Touch and pinch 54 + 48 |
| Manipulation | Low-fidelity manipulation 48+ 68 |

**Table 2: Action mapping in this proposed interaction concept.**

| Virtual action | Real action | |
|---|---|---|
| Touch | "Ghost touch" (index finger) | See schema left to 36, figure 4. |
| Confirm magnification | Double pinch gesture, thumb and index fingers | See reference 38, figure 4. |
| Turn-off magnification | | |
| Select | Unique Pinch gesture, | See reference 48, figure 4. |
| De-select | thumb and index fingers | |
| Toggle a switch | Unique Pinch gesture (thumb and index) | See reference 48 + 68, figure 4. |
| | together with a movement | |

In an example of the invention, said overall 3D location sensitive input 29 at least partly reflects at least one of the following human operator 5 actions, of: selecting, deselecting, highlighting, magnifying and manipulating at least one of said simulated object 40 on the visual display(s) 8 e.g. on screens 25.

Depending on predetermined functions, the finger-to-goal contact sensitive input 30 at least partly reflects at least one of the following human operator 5 sensitive inputs, for the simulator mock up 1, of: selecting, deselecting, highlighting, magnifying and manipulating at least one of said simulated object 40 on the visual display(s) 8 / screen(s) 25.

In embodiments, said dedicated haptic feed back stage 27 at least partly confirms at least one of the following human operator 5 sensitive inputs (31), for the simulator mock up 1, of: selecting, deselecting, highlighting, magnifying and manipulating at least one of said simulated object 40 on the visual display(s) 8 / screen(s) 25.

For instance, the dedicated haptic feed back stage 27 at least partly confirms at least one non-contacting input, for instance a mere confirmation of completion of a non-tactile operation (e.g. deselecting, highlighting, magnifying).

With the invention, said finger-to-goal contact sensitive input 30 reflects a multiple contact between two or more interactive sensors 19, e.g. a double quickly sequenced contact of contacted fingers sleeves (14-16) goal pad (19). In an example, two interactive sensors 19 integrated on an index plus middle finger sleeve 16 are contacted by the Human Operator 5 with a palm sensor 20.

Similarly, the glove 6 including one thumb finger sleeve 15 and at two opposed finger sleeves 16, both with interactive sensors 19, allows for a predetermined finger-to-goal contact sensitive input 30 to reflect contact between the thumb sensor 19 with the opposed contacting pad or sensor 19 integrated to the two opposed finger sleeves 16. In such a purpose, the visual display(s) 8 / screen(s) 25 are of tactile type in some embodiments.

When the glove 6 includes at least one palm contacting pad (sensor 20) integrated to a palm portion 12 of the glove 6, and that said finger-to-goal contact sensitive input 30 reflects contact between at least one finger sleeve (sensor 19) with said palm contacting pad (sensor 20).

A predetermined finger-to-goal interaction stage 19 as per the invention, provides for an index finger to be used to select one or a plurality of simulated objects 40, in such a manner that when a contacting pad (sensor 19) on the index finger sleeve (16) collides with said simulated object(s) 40 displayed on a visual display 8, is provoked a dedicated haptic feed back stage 27 involving a vibration, e.g. with said vibration remaining activated until collision between sleeve 16 and displayed object 40 ends.

In an embodiment, a combination of a finger-to-goal interaction stage 27 with a 3D dedicated overall motion detecting stage 27 is accomplished. This combination involves a fist interaction action ordered by maintaining a so-called closing hand contact (one or a plurality of opposed finger 16 contacting the palm portion 13) thus electrically short circuiting the corresponding finger sensor(s) 19 with the palm sensor 20.

This results in an overall 3D location sensitive input 29 reflecting moving one or a plurality of simulated object(s) 40 to be produced.

For instance, a further combination of these combined finger-to-goal interaction stage 19 plus 3D dedicated overall motion detecting stage 21 is accomplished with a combined dedicated haptic feed back stage 27, through activating at least one haptic feed back vibrator component 27 integrated on a dorsal side 18 of the glove 6, thus indicating to the human operator 5 that said fist interaction action is duly being performed.

In an embodiment, a 3D dedicated overall motion detecting stage 27 involves a filtering step 49 inhibiting inputs due to subtle movements of the glove 6, having an amplitude inferior to a predetermined minimal distance value, e.g. 1-5 mm.

Possibly, this filtering step 49 is limited to one of the directions X, Y and / or Z of the static 3D landmark, for instance direction X.

In another embodiment, a 3D dedicated overall motion detecting stage 21, e.g. along direction X but in a way furthering from visual display 8, involves a zooming display input 51, for magnifying at least a simulated object 40 as visualized on the visual display 8.

This allows to increase visual resolution on areas of present interest, e.g. on a desktop / laptop computer screen 25, to be offered to vision with an enlarged view or magnification.

For instance, a double pinch gesture (as per 38) controls such a magnifying action.

**Table 3: (Interaction technique) "Magnify" task.**

| | |
|---|---|
| Task name | Magnify |
| Technique name | Pop-out widgets (= objects 40) |
| Behaviour | When the virtual hand reaches a panel, the closest widgets are highlighted. An action from operator 5 is needed in order to confirm the magnification of that set of widgets 40. |
| Metaphor | Double-click to maximize a window (in 8 / 25). |
| Pre-conditions | The virtual glove 6 is touching the panel. |
| User's avatar | Articulated hand. While touching the panel, the hand is outlined and a 3D cursor is shown at the index fingertip. |
| Action mapping | Touch: virtual hand (index finger). |
| | Confirmation: double pinch between thumb and index fingers. |
| Feedback | On touch, before confirmation: |
| | • Visual: the virtual hand is outlined; the set of widgets 40 is highlighted. |
| | • Sound: an audible sound confirms touch. |
| | After confirmation: |
| | • Visual: the set of widgets are magnified on a solid plane. |
| | • Sound: an audible sound confirms magn ification. |
| Post-conditions | The user can interact with the magnified widgets 40 on the HMI 2. |

In examples, a dedicated haptic feed back stage 27 is ended when contact between previously contacted sensors 19-20 together is interrupted. This indicates achievement of a finger-to-goal interaction stage 19 to which said dedicated haptic feed back stage 27 was combined.

In other embodiments:
- a first 3D dedicated overall motion detecting stage 21 provokes pre-selecting of a simulated object 40,
- a finger-to-goal interaction stage 19 provokes selecting validation of this simulated object 40, while
- a further 3D dedicated overall motion detecting stage 21 provokes controlling of that simulated object 40 according to predetermined movements of the glove 6 with respect to the static 3D landmark XYZ.

Said pre-selecting and selecting validation being timely maintained despite the further 3D dedicated overall motion detecting stage 21, even if said predetermined movements of the glove 6 meanwhile stopped the matching with the simulating object 40.

Thus pre-selecting and selecting validation being timely is maintained as long as selecting via said finger-to-goal interaction stage 19 is maintained.

For illustrating the above, figure 5 is a logical process flowchart partly illustrating operation of a method according to the invention. This flowchart includes interaction techniques of: a status diagram for pop-out widgets, status diagram for turn-off actions, status diagram for touch and pinch selection / de-selection and a status diagram for low fidelity manipulation (handling) interaction, etc.

In figure 5, is shown a State diagram for "Pop-out widgets" interaction technique.

This technique involves a step 52 providing that a target object 40 is touched (reference 54), a visual image of the glove 6 on the display 8 is outlined, the interesting objects 40 of the HMI 2 are highlighted, while a "touch sound" is played by a loudspeaker arrangement 53 (see figure 1) of belonging to the system 4.

A step 55 involves a time sequence during which a confirmation is awaited. Then, a double pinch gesture (38) of glove 6 provokes pop-out objects 40 to pop-up.

Otherwise, if a touch ceasing gesture 56 occurs, the solid hand glove 6 is displayed again, while highlighting is disabled.

At a step 57, an interaction technique for "Turn off magnification" is explained. The Table 4 below refers to this. In other words, when a magnified area on display 8 is touched (54), the image of the glove 6 is outlined, this area is highlighted while a "touch sound" is played.

A step 55 involves a time sequence during which a "turn-off action" confirmation is awaited. Then, a double pinch gesture (38) provokes pop-out relevant objects 40 to be restored while a "zoom out" sound is played.

Otherwise, if a touch ceasing gesture 56 occurs, the solid hand glove 6 is displayed again, while highlighting is disabled.

**Table 4: Interaction technique ("Turn off magnification").**

| | |
|---|---|
| Task name | Turn off magnification |
| Technique name | Turn off action |
| Behaviour | Operator 5 turns off current magnification by performing a gesture on a magnified area, or by performing the same gesture on another panel to magnify a different set of widgets 40. |
| Metaphor | Double-click to restore a window. |
| Pre-conditions | The virtual hand is touching a magnified set of widgets on a plane. |
| User's avatar | Articulated hand. While touching the magnified plane, the hand is outlined and a 3d cursor is shown at the index fingertip. |
| Action mapping | Touch: virtual hand (index finger). Turn off: double-pinch gesture between thumb and index fingers. |
| Feedback | On touch, before turn-off action: |
| | • Visual: the virtual hand is outlined, the magnified plane is highlighted. |
| | • Sound: an audible sound confirms touch. |
| | After turning off: |
| | • Visual: the magnified plane and widgets vanish. |
| | • Sound: an audible sound confirms restoration. |
| Post-conditions | The set of widgets are no longer magnified, but if any of them was selected then remains selected. |

At a step 58, an interaction technique for "Selection task" is explained. The Table 5 below refers to this.

There, when an area on display 8 is touched (54), the image of the glove 6 is outlined, this area is highlighted while a "touch sound" is played.

A step 55 involves a time sequence awaits for confirmation.

When confirmation has occurred via a touch gesture (54), the selected objects 40 is high lightened (in a different colour), while a "selected object" sound is played.

Even if touch ceases, the selected objects 40 remains high lightened, and waits for further actions.

**Table 5. Interaction technique for "Selection".**

| | |
|---|---|
| Task name | Selection |
| Technique name | Touch and pinch |
| Behaviour | User selects a widget by touching it with his/her virtual hand, first, and then confirming its selection with a gesture. |
| Metaphor | Click to select a program icon on a window desktop |
| Pre-conditions | The virtual hand is touching a widget. |
| User's avatar | Articulated outlined hand, 3D cursor at the index fingertip. |
| Action mapping | Touch: virtual hand (index finger). |
| | Confirmation: pinch gesture between thumb and index fingers. |
| Feedback | On touch, before confirmation: |
| | • Visual: the virtual hand is outlined, the touched widget is highlighted. |
| | • Sound: an audible sound confirms touch. |
| | After confirmation: |
| | • Visual: selected widget remains highlighted, but with a different colour. |
| | • Sound: audible sound confirms selection. |
| Post-conditions | Touched widget changes to selected state and start listening to manipulation actions. It remains in that state even if touch ceases. |

For "touch and pinch" selection or de-selection, quite the same tasks and results occur.

As for step 58, an interaction technique for "Turn off magnification" is explained. The Table 6 below refers to this. In other words, when an object 40 on display 8 is touched (54), the image of this object 40 is high lightened, while a "touch sound" is played.

A step 55 involves a time sequence during which a "confirmation" is awaited. Then, a unique pinch gesture provokes changes in highlight display of objects 40 while a "de-selection" sound is played. A further unique pinch gesture on any other object 40 disables highlighting while a "des-selection" sound is played. Otherwise, if a touch ceasing gesture 56 occurs, the highlighting is disabled.

**Table 6. Interaction technique ("De-selection").**

| | |
|---|---|
| Task name | De-selection |
| Technique name | Same as selection |
| Behaviour | User de-selects the object 40 by selecting another one, or performing a single pinch gesture on any other part of the HMI 2. |
| Metaphor | De-select a program icon by clicking on any other part of the window desktop. |
| Pre-conditions | An object 40 is already selected. |
| User's avatar | Articulated outlined hand, 3D cursor at the index fingertip. |
| Action mapping | Touch: virtual hand (index finger). Confirmation: pinch gesture between thumb and index fingers. |
| Feedback | Before de-selection: |
| | • Visual: the selected widget is highlighted. |
| | After de-selection: |
| | • Visual: the widget is no longer highlighted. |
| | • Sound: audible sound confirms de-selection. |
| Post-conditions | The widget is de-selected and no longer listens to manipulation actions. |

At a step 59, an interaction technique for "Manipulation" is explained. The Table 7 below refers to this.

When an object 40 on display 8 is selected (see above), the pinch begins. Object to be manipulated highlighting is changed while a "manipulation sound" is played.

A step 60 shows a dragging action operated via the 3D stage 21, that involves that said object 40 is moved together with motions applied by the Human Operator 5 upon the glove 6.

For instance, such a motion provokes a virtual turn of a switch (object 40).

When pinch ends, the high lighting of the manipulated object 40 is restored. A loop 61 checks that the glove 6 is submitted to a movement 68.

**Table 7: Interaction technique for "Manipulation" task.**

| | |
|---|---|
| Task name | Manipulation |
| Technique name | Low-fidelity manipulation |
| Behaviour | User manipulates a toggle switch with a pinch gesture and a rough movement. Because the widget remains selected, the virtual hand does not need to be in touch with the switch in order to initiate the manipulation, provided it does not touch any other part of the cockpit. |
| Metaphor | Click and move the cursor to drag a scroll bar. |
| Pre-conditions | A widget is already selected. |
| User's avatar | Articulated outlined hand, 3D cursor at the index fingertip. |
| Action mapping | Manipulation: pinch gesture between thumb and index fingers and a rough movement in the direction of the switch. |
| Feedback | Before manipulation: |
| | • Visual: the selected widget is highlighted. |
| | During manipulation: |
| | • Visual: the widget is highlighted in a different colour. |
| | • Sound: an audible sound confirms manipulation. |
| Post-conditions | The function of the widget is triggered. |

Now referring at figure 6, a logical process flowchart partly illustrating operation of a method according to the invention is explained. This flowchart includes interaction tasks sequences of: looking around, magnifying, selecting a panel / widget, manipulated this object 40, de-selecting this object 40 and turning-off magnification.

Figure 6 exposes some of the principles of the invention, providing to the Human Operator 5 with an innovative set of interaction features, easy to use and customize, to operate complex HMI e.g. in virtual helicopter cockpits.

These Interaction features, also known as interaction concepts, are composed by a sequence of predefined interaction techniques that are at the same time a process to perform a concrete interaction task. Synthetically, the following terms and expressions are explicated by:
- Interaction task: one of the actions involved for using an object 40,
- Interaction technique: method to perform an interaction task,
- Interaction concept/method: one particular sequence of interaction techniques, that leads to the goal of using an object 40 (or group of). Every interaction method consists on the following sequence of tasks as per figure 6.

In figure 6, the block 32 represents:
- a "looking around task" executed with the headset detector 33,
- a "magnifying task" 35, executed e.g. through a double pinch gesture 38,
- a "selection task" 39, executed through a unique pinch gesture 48,
- a "manipulate an object" task 50, involving a unique pinch gesture 48 combined with a motion of the glove task 68,
- after this, the sequence possibly provides for a "de-selection task" also referenced 39, and,
- either the sequence returns to the above "selection task" 39, or goes to a "turn off magnification" task 57.

Therefore, the Human operator 5 can define, in dedicated configuration files of the software 9, the particular interaction technique for each task. The following table summarizes the interaction examples that can be chosen to implement a particular task:

**Table 8: Catalog of examples of features.**

| Looking around | Magnify | Selection | Manipulation |
|---|---|---|---|
| Head tracking | Zoom-in | Hand on | Genuine |
| | Go-go-gadget | neck! Touch to select | Low-fidelity |
| | Grasp and bring closer | Touch and wait | Hot spots |
| | | Focus and wait | Semi-automatic |
| | Camera-in-hand | Touch and pinch | |
| | Tracking camera | Focus and pinch | |
| | Pop-out widgets | | |
| | Pop-up widgets | | |

| | Turn off magnification | De-selection | |
|---|---|---|---|
| | Turn off action | Hand off | |
| | Upon de-selection | Same as selection | |
| | Upon manipulation end | Time out | |
| | | Look away | |
| | | Pinch to de-select | |
| | | Upon manipulation end | |
| | | Upon magnification end | |
| | | | |

| User's avatar | Virtual touch | Other actions | Feedback |
|---|---|---|---|
| Hand | Virtual hand | Pinch gesture | Visual |
| - Solid / outlined | Ray casting | Pinch gesture coupled | Audio |
| - (Non) articulated | | with hand movement | Vibrotactile |
| | | Finger / hand movement | |
| 3D cursor | | Head movement | |
| | | Hold still | |

Such a configuration example allows applying different interaction concepts to different unitary objects 40 types (or objects 40 groups). To support all this, the invention glove 6 is provided, mixing the following motion detection and vibration feedback capabilities:
- The use of electrical sensors 19-20 to determine without error when two or more fingers, whichever, get in contact, thus detecting any combination of finger(s) and portion of glove 6 contacts.
- Electrical contact in the palm portion 13, with which new gestures such as grasping can be detected. The interaction task sensor 20 could be also combined with fingers sensors 19 for providing different events / actions.
- Use of sleeve pads / goal pads 27 acting as vibrators provide tactile feedback, but only in places useful for HMI 2 operations.

This solution, plus existing HMI 2 and motion tracking technology, provides the capability to perform all the set of interaction techniques.

Some features of the invention are adapted to further purposes:
- Additional contact pad 19 on thumb sleeve finger 15 (and / or on index sleeve finger 16) could facilitate contact with such thumb / index sleeve finger(s) 15 / 16, not only at fingertip.
- Dual hand configuration for even more complete gestures, the system 4 then including a pair of two hand wearable gloves 6, not only one.

Another embodiment includes the mixture of this / these glove(s) 6 with tactile surfaces, positioned at the same distance as cockpit panels. This way the glove 6 can rest on the surface and gesture on the surface be also gathered (useful for knobs and keyboards).

Along with this, embodiments of the invention provides for Interaction techniques which are implemented in software 9, based on inputs (29, 30, 31, etc.) from the set of glove(s) 6 and / or goggles 34 (i.e. an embodiment of visual display 8) plus headset 33, plus collision detection from a Virtual Reality application. Interaction concepts are defined in Virtual HMI 2 in a configuration file that indicates the different states and transitions, for each type of object(s) 40.

A catalog of objects 40 is available, so that the Human Operator 5 can add them to the virtual reality scenario in the correct position.

This Human Operator 5 assigns an interaction concept for each object 40 (or group of) type. The Human Operator 5 can create and apply new configurations, indicating in the configuration the different states and transitions and which interaction technique is to be used for each interaction task.

The configuration indicates which event, generated by interaction techniques, causes the transition between states.

In a glove 6, a combination of contact sensors 19-20 and / or components 27 provides a rich set of events for contact gesture detection in order to e.g. magnify, select and manipulate elements of HMI 2. Many interaction techniques not possible with prior art can be performed with this device, like:
- Grasping: very intuitive and useful to move the Human Operator 5 avatar (i.e. the image of this Human Operator 5 on the display(s) 8 and / or screen(s) 25, in the virtual environment of the HMI 2, or to magnify elements thereof.
- Gestures to handle small objects 40 are natural and close to the real life action.
- Mixing of interaction techniques is available with the invention that can provide fast performance of operations (e.g. selecting and pressing quickly and repetitively a button like object 40).

The use with components 27 of a compatible receiver 22 as an external active LED tracker reduces complexity and weight of glove 6 and improves tracking accuracy.

Now, further examples of interaction concepts provided by embodiments, are exposed as follows:
- Set of interaction capabilities is targeted to many different uses. The possibility to change specific methods by the Human Operator 5 is enhancing the existing techniques, which are more rigid.
- The predefined sequence of tasks that drives the construction of interaction methods has proven to be a generic and useful way to adapt to specific Human Operator 5 needs.
- Adding widgets from a catalog to a scenario is similar to real life. Objects 40 have already an interaction concept assigned to them, so once they are added, they can readily be used.
- The Human Operator 5 modifiable state machine configuration for interaction concepts adds flexibility to a HMIs 2 environment.
- Use of interaction concepts has proven that an effective usage of a virtual cockpit, with all its HMI 2, is possible and comfortable in virtual reality.

Vibrator components 27 are used for haptic feedback in two different ways:
As a direct tactile feedback upon contact with solid geometries that accept manipulation: in order to indicate the Human Operator 5 that is touching some useable object(s) 40 (widget/panel), as reported by collision detection.

So as to inform the Human Operator 5 about the status of actions being performed, it is not necessarily according to the invention, to relate them with collision detection (54).

This of great value in order to help on using simulated objects 40, comfortably and thus solving ergonomic problems.

Summarized now, are some examples of the invention.
Example 1: index finger is always used to select simulated objects 40 (e.g. panels / widgets). When index finger collides with a simulated object 40, vibrator in that finger is activated, and remains activated until collision ends.
Example 2: when fist interaction concept (closing hand and moving avatar in space) is being performed, vibrator on the back of the glove 6 is activated. This indicates the Human Operator 5 that fist is being performed. Subtle movements would not be detected by the Human Operator 5, and vibrations help to perceive that fist is being done. Once fingers are released and fist stops, vibration ends.
Example 3: once an object 40 is selected, manipulation does not force the Human Operator 5 to keep position on the object 40, as it would be frustrating and increase Human Operator 5 tiredness.

In most interaction concepts implemented, the object 40 is selected with a pinch (38 / 48) between thumb and middle fingers, and can be manipulated by hand movement until pinch is released. This way used can move the glove 6 comfortably, and thumb vibration is used to indicate the Human Operator 5 that the manipulation of the object 40 is being performed, even if the glove 6 is visually away from this object 40.

The invention makes it possible, in an HMI simulation, the use of a glove 6 including some smart devices (e.g. contact sensors, vibrators and positioning LEDs), to enhance e.g. a training process. With new combinations through which simulated objects 40 are virtually operated (e.g. coupling the thumb tip with the index finger tip - where contact sensors 19 are incorporated to the glove 6 - plus moving the whole glove 6) precise and reliable control signals can be provided to the simulator mock up 1.

Security is increased by « haptic » tactile feed back, which confirms that a simulated object 40 is actually activated (start vibrations) or released (stop vibrations).

Another new and useful technical solution made possible owing the invention is the agreeable, comfortable and precise operating of a simulator mock up 1, without having to require a large visual display, since even portable computer screens are perfectly convenient.

Now, a scenario of subsequent operations according to the invention is exposed through chronological sequences. This scenario aims virtually switching "ON" a fuel pump prime. The FULL PUMP PRIME switch is initially virtually "OFF". The following actions describe the first sequences of a "Starting first engine" procedure, from a recent helicopter add-on, as it is performed using the interaction techniques:
Sequence 01: The Human Operator 5 is sat in the pilot seat, looking around the inside of the cockpit to find the FUEL PUMP PRIME switch, i.e. an object 40.
Sequence 02: The Human Operator 5 locates this object 40 in the virtual pedestal panel.
Sequence 03: The Human Operator 5 looks sees the virtual glove 6, solid and articulated, and moves it towards the pedestal panel.
Sequence 04: When the glove 6 approaches to the panel, it collides with that panel's invisible bounding volume and becomes transparent, only its outline and a 3D cursor at the index fingertip (e.g. a red sphere on visual display 8) are visible.
Sequence 05: The group of objects 40 close to the collision point is automatically highlighted, so the Human Operator 5 can easily see on display(s) 8 which of these objects 40 are going to be magnified.
Sequence 06: The Human Operator 5 performs a double pinch gesture (38) with the thumb and index fingers that confirms the group of objects 40 has to be magnified. The group of objects 40 is then magnified on a plane parallel to the pedestal panel (Pop-out widgets).
Sequence 07: Once the gesture 38 is performed, the Human Operator 5 is able to interact with the objects 40 on it. Therefore, the selection is performed on the magnified widgets, not on the normal sized (small) ones. If the target object 40 is not in the magnified group, the Human Operator 5 can turn off magnification by magnifying another group of widgets.
Sequence 08: The Human Operator 5 moves the index finger around the magnified (augmented) panel. Each time the index fingertip collides with the invisible bounding volume of a widget, the later object 40 is highlighted (visual feedback).
Sequence 09: The target widget (object 40 = FUEL PUMP PRIME) is reached.
Sequence 10: While keeping the index finger on the target object 40, the Human Operator 5 performs a pinch gesture with the thumb and middle fingers in order to select it (Touch and pinch = 48 + 68).
Sequence 11: The highlighting color on display 8 changes, confirming that the object 40 or widget is already selected and that no other widget will listen to manipulation actions until it is de-selected.
Sequence 12: The Human Operator 5 can now move the glove 6 to a more comfortable position. Since there is no need to keep that glove 6 on the widget, the Human Operator 5 just needs to keep that glove 6 away from other objects 40 of the HMI 2 while performing manipulation.
Sequence 13: The Human Operator 5 performs a pinch gesture with the thumb and index fingers, and moves the glove 6 forward in order to manipulate the target object(s) 40 (e.g. with Low-fidelity manipulation).

The FULL PUMP PRIME switch is now virtually ON.
Sequence 14: Once the manipulation pinch gesture is released, the Human Operator 5 can either select another object(s) 40 / widget or perform the pinch gesture on any other object 40 in the HMI 2 in order to de-select the original widget (De-selection).
Sequence 15: Now that the Human Operator 5 has finished the manipulation and the selection of the widget, the turn off magnification can be performed by magnifying another group of object(s) 40 or performing a double pinch gesture on the magnified panel.
Sequence 16: The original status is restored.

Obviously, the invention may be subjected to variations as to its implementation, said variations not being possibly identified exhaustively.

## Claims

1. Method of operating an aircraft simulator mock up (1) virtually replicating a human-machine interface (2) in a dedicated aircraft (A), in particular a helicopter, for performing practical lessons with respect to emergency procedures that are provided for the dedicated aircraft (A), said aircraft simulator mock up (1) including at least:
- a computer (3) with a processor (11), a non-transitory computer-readable medium (10) containing computer-commands, said computer-commands, when executed, causing the processor (11) of the computer (3) to automatically perform operations replicating said human-machine interface (2), displaying a human operator avatar (5) in the replicated human-machine interface (2), and displaying landing/flying surroundings (26) of the dedicated aircraft (A), said replicated human-machine interface (2) illustrating a cockpit of the dedicated aircraft (A) having a plurality of simulated objects (40) comprising at least a panel (41), buttons (42), knobs (43), handles (44), pedals (45), and switches (46);
- an instructions / sensitive feedback system (4) functionally coupled with at least one body organ of a human operator (5) of the aircraft simulator mock up (1), and also coupled with said computer (3), so as to collect from the human operator sensitive inputs for the aircraft simulator mock up (1) and also to indicate operating information of the aircraft simulator mock up (1) to said human operator; said instructions / sensitive feedback system (4) being equipped with at least:
- one hand wearable glove (6) with finger sleeves and interaction task sensor (19-20) and 3D overall motion detection means (21), arranged flush with the glove (6) to enable the tracking of movements of said wearable glove relative to a static 3D landmark (XYZ);
- a visual display (8) able to show the simulated objects (40) of the replicated human-machine interface (2), so as to allow said simulated objects to be virtually manipulated via the glove (6) during operating of the aircraft simulator mock up (1);
said method automatically performing the following operations in order to enable the human operator to perform practical lessons with respect to the emergency procedures that are provided for the dedicated aircraft (A):
- a 3D overall motion detecting stage (21) configured to enable performance of an action related to the emergency procedures that are provided for the dedicated aircraft (A), wherein an overall 3D location sensitive input (29) reflects an instant position of the glove (6), said overall 3D location sensitive input (29) being provided to the computer, thanks to the instructions / sensitive feedback system (4), wherein a human operator avatar (5) is displayed on the visual display (8) to visualize the instant position of the glove (6) in the replicated human-machine interface (2), and wherein the 3D dedicated overall motion detecting stage (21) comprises processing of a zooming display input for magnifying at least a selected simulated object (40) as visualized on the visual display (8);
- a finger-to-goal interaction stage (19) configured to enable performance of an action related to the emergency procedures that are provided for the dedicated aircraft (A), wherein a finger-to-finger sensitive contact input (30) reflects a recent physical touch-up between at least a contacting finger sleeve pad (19) with a series of goal pads (19-20) forming interaction task sensors (19-20), the recent physical touch-up between at least a contacting finger sleeve pad (19) with a goal pad (19-20) being reflected by interaction task sensors (19-20) integrated to the glove (6); and
- a dedicated haptic feedback stage (27), wherein a recent physical touch-up between at least contacted finger sleeves pad (19) / goal pad (19-20) / 3D overall motion detection means (21) is reflected with a haptic feedback tactile vibration input (31), the haptic feedback tactile vibration input (31) to a corresponding portion of the glove (6) being located at said finger sleeve pad / goal pad, thanks to at least one of said two contacting finger sleeves having integrated therein an haptic feedback component (27), wherein the dedicated haptic feedback stage (27) at least partly confirms at least one of the following human operator sensitive inputs, for the aircraft simulator mock up (1), of: selecting, deselecting, highlighting, magnifying and manipulating at least one of said simulated objects (40) on the visual display (8).

2. Method according to claim 1,
**characterized in that** said overall 3D location sensitive input (29) at least partly reflects at least one of the following human operator sensitive inputs for the aircraft simulator mock up (1), of: selecting, deselecting, highlighting, magnifying and manipulating at least one of said simulated object (40) on the visual display (8).

3. Method according to claim 1,
**characterized in that** said finger-to-goal contact sensitive input (30) at least partly reflects at least one of the following human operator sensitive inputs, for the aircraft simulator mock up (1), of: selecting, deselecting, highlighting, magnifying and manipulating at least one of said simulated object (40) on the visual display (8) that includes at least one of a desktop / laptop computer screen (25).

4. Method according to claim 1,
**characterized in that** said finger-to-goal contact sensitive input (30) reflects a multiple contact, e.g. a double quickly sequenced contact (38), between contacted finger sleeves pad (19) / goal pad (19-20).

5. Method according to claim 1,
**characterized in that** the hand wearable glove includes one thumb finger sleeve (15) to be worn by a thumb finger of the human operator (5) and at least two opposed finger sleeves (16) to be worn by opposable fingers of the human operator (5), and that said finger-to-goal contact sensitive input (30) reflects contact between a thumb contacting pad (19) integrated to the thumb finger sleeve (15) and at least one opposed contacting pad (19) integrated to the opposed finger sleeves (16).

6. Method according to claim 1,
**characterized in that** the glove (6) includes at least one palm portion (17) with a goal contacting pad (20) integrated to a palm side (17) of the glove (6), and that said finger-to-goal contact sensitive input (30) reflects contact between at least one finger sleeve (15-16) contacting pad (19) integrated to corresponding finger sleeve(s) and said palm contacting pad (20).

7. Method according to claim 1,
**characterized in that** at a finger-to-goal interaction stage (19), an index finger is used to select one or a plurality of simulated objects (40) replicating at least one control panel / instrument dashboard, so that when a 3D overall motion detection means (21) on the index finger sleeve collides with said simulated object (40), a dedicated haptic feed back stage (27) involves a tactile vibration.

8. Method according to claim 1,
**characterized in that** a combination of a finger-to-goal interaction stage (19) with a 3D dedicated overall motion detecting stage (21) is accomplished, with a fist interaction action ordered by maintaining a so-called closing hand contact between at least one finger sleeve pad (19) together with a palm pad (20), and a 3D location sensitive input (30) reflecting moving in said static 3D landmark of at least one simulated object (40).

9. Method according to claim 1,
**characterized in that** a 3D dedicated overall motion detecting stage (21) involves a filtering step (49) inhibiting inputs (29) due to subtle movements of the glove (6) with an amplitude inferior to a predetermined minimal distance value.

10. Method according to claim 1,
**characterized in that** a dedicated haptic feed back stage (27) is ended when a contact between a predetermined finger / goal pad (19-2) is interrupted, thus indicating achievement of a finger-to-goal interaction stage (19) to which said dedicated haptic feed back stage (27) was combined.

11. Method according to claim 1,
**characterized in that**:
- a first 3D dedicated overall motion detecting stage (21) provokes pre-selecting of a simulated object (40),
- a finger-to-goal interaction stage (19) provokes selecting validation of this simulated object (40), while
- a further 3D dedicated overall motion detecting stage (21) provokes controlling of that simulated object (40) according to predetermined movements of the glove (6) with respect to the static 3D landmark (XYZ),
said pre-selecting and selecting validation being timely maintained despite the further 3D dedicated overall motion detecting stage, even if said predetermined movements of the glove (6) stop matching with the simulating object (40) but as long as selecting via said finger-to-goal interaction stage (19) is maintained.

12. Aircraft simulator mock up (1) virtually replicating a human-machine interface (2) in an aircraft (A), in particular a helicopter, for performing practical lessons with respect to emergency procedures that are provided for the dedicated aircraft (A),
said aircraft simulator mock up (1) including at least:
- a computer (3) with a processor (11), a non-transitory computer-readable medium (10) containing computer-commands, said computer-commands, when executed, causing the processor (11) of the computer (3) to automatically perform operations replicating said human-machine interface (2), displaying a human operator avatar (5) in the replicated human-machine interface (2), and displaying landing/flying surroundings (26) of the dedicated aircraft (A), said human-machine interface (2) illustrating a cockpit of the dedicated aircraft (A) having a plurality of simulated objects (40) comprising at least a panel (41), buttons (42), knobs (43), handles (44), pedals (45), and switches (46);
- an instructions / sensitive feedback system (4) functionally coupled with at least one body organ of a human operator (5) of the aircraft simulator mock up (1), and also coupled with said computer (3), so as to collect from the human operator (5) sensitive inputs for the aircraft simulator mock up (1) and also to indicate operating information of the aircraft simulator mock up (1) to said human operator;
- said instructions / sensitive feed back system (4) being equipped with, at least:
- one hand wearable glove (6) with finger sleeves and interaction task sensor (19-20) and 3D overall motion detection means (21) arranged flush with the glove (6) to enable the tracking of movements of said wearable glove relative to a static 3D landmark (XYZ), wherein at least a sleeve pad (19) / goal pad (19-20) forming touch interaction task sensors is integrated to the glove (6), and wherein a plurality of haptic feedback components (27) are integrated to the glove (6), said haptic feedback components (27) allowing the glove (6) to reflect a tactile vibration;
- a visual display (8) able to show the simulated objects (40) of the replicated human-machine interface (2), so as to allow said simulated objects to be virtually manipulated via the glove (6) during operating of the aircraft simulator mock up (1);
**characterized in that** said aircraft simulator mock up (1) is configured to perform the method of at least one of claims 1 to 11.

13. Aircraft simulator mock up (1) according to claim 12, wherein:
- the at least one 3D overall motion detection means (21) comprises LEDs to be targeted by a LED location receiver (22) logically coupled to said computer (3), and / or
- the at least one haptic feedback component (27) is of the group including: micro motor, nano object or MEM, integrated to and / or into the glove (6); and / or
- the at least one sleeve pad (19) / goal pad (19-20) is an electrically conductive area integrated flush to the glove (6).

## Patentansprüche

1. Verfahren zum Betreiben eines Flugzeugsimulationsmodells (1), das eine Mensch-Maschine-Schnittstelle (2) in einem speziellen Flugzeug (A), insbesondere einem Hubschrauber, virtuell nachbildet, um praktische Übungen in Bezug auf für das spezielle Flugzeug (A) vorgesehene Notfallprozeduren durchzuführen, wobei das Flugzeugsimulationsmodell (1) mindestens umfasst:
- einen Computer (3) mit einem Prozessor (11), ein nichtflüchtiges computerlesbares Medium (10), das Computerbefehle enthält, wobei die Computerbefehle, wenn sie ausgeführt werden, den Prozessor (11) des Computers (3) veranlassen, automatisch Operationen durchzuführen, die die Mensch-Maschine-Schnittstelle (2) nachbilden, einen menschlichen Bediener-Avatar (5) in der nachgebildeten Mensch-Maschine-Schnittstelle (2) anzeigen, und die Lande-/Flugumgebung (26) des speziellen Flugzeugs (A) anzeigen, wobei die nachgebildete Mensch-Maschine-Schnittstelle (2) ein Cockpit des speziellen Flugzeugs (A) mit einer Mehrzahl von simulierten Objekten (40) zeigt, die mindestens ein Bedienfeld (41), Tasten (42), Knöpfe (43), Griffe (44), Pedale (45) und Schalter (46) umfassen;
- ein Befehls- und Sinnesrückkopplungssystem (4), das funktionell mit mindestens einem Körperorgan eines menschlichen Bedieners (5) des Flugzeugsimulationsmodells (1) gekoppelt ist und auch mit dem Computer (3) gekoppelt ist, um von dem menschlichen Bediener Sinneseingaben für das Flugzeugsimulationsmodell (1) zu sammeln und auch Betriebsinformationen des Flugzeugsimulationsmodells (1) dem menschlichen Bediener anzuzeigen; wobei das Befehls- und Sinnesrückkopplungssystem (4) mindestens ausgestattet ist mit:
- einem mit einer Hand tragbaren Handschuh (6) mit Fingerhülsen und Interaktionsaufgabensensor (19-20) und 3D-Gesamtbewegungserfassungsmitteln (21), die bündig mit dem Handschuh (6) angeordnet sind, um die Verfolgung von Bewegungen des tragbaren Handschuhs relativ zu einem statischen 3D-Orientierungspunkt (XYZ) zu ermöglichen;
- eine visuelle Anzeige (8), die in der Lage ist, die simulierten Objekte (40) der nachgebildeten Mensch-Maschine-Schnittstelle (2) so zu zeigen, dass die simulierten Objekte während des Betriebs des Flugzeugsimulationsmodells (1) über den Handschuh (6) virtuell manipuliert werden können;
wobei das Verfahren automatisch die folgenden Operationen durchführt, um es dem menschlichen Bediener zu ermöglichen, praktische Übungen in Bezug auf die für das spezielle Flugzeug (A) vorgesehenen Notfallprozeduren durchzuführen:
- eine 3D-Gesamtbewegungserfassungsstufe (21), die konfiguriert ist, um die Durchführung einer Aktion in Bezug auf die für das bestimmte Flugzeug (A) vorgesehenen Notfallprozeduren zu ermöglichen, wobei eine 3D-Gesamtortsempfindlichkeitseingabe (29) eine momentane Position des Handschuhs (6) widerspiegelt, wobei die 3D-Gesamtortsempfindlichkeitseingabe (29) dem Computer über das Befehls- und Sinnesrückkopplungssystem (4) zur Verfügung gestellt wird, wobei ein menschlicher Bediener-Avatar (5) auf der visuellen Anzeige (8) angezeigt wird, um die augenblickliche Position des Handschuhs (6) in der nachgebildeten Mensch-Maschine-Schnittstelle (2) zu visualisieren, und wobei die dedizierte 3D-Gesamtbewegungserfassungsstufe (21) die Verarbeitung einer Zoom-Anzeigeeingabe zum Vergrößern mindestens eines ausgewählten simulierten Objekts (40), das auf der visuellen Anzeige (8) visualisiert wird, umfasst;
- eine Finger-zu-Ziel-Interaktionsstufe (19), die konfiguriert ist, um die Durchführung einer Aktion in Bezug auf die für das spezielle Flugzeug (A) vorgesehenen Notfallprozeduren zu ermöglichen, wobei eine Finger-zu-Fingerkontaktempfindliche Eingabe (30) eine kürzliche physische Berührung zwischen mindestens einem kontaktierenden Fingerhülsenpad (19) mit einer Reihe von Zielpads (19-20), die Interaktionsaufgabensensoren (19-20) bilden, widerspiegelt, wobei die kürzliche physische Berührung zwischen mindestens einem kontaktierenden Fingerhülsenpad (19) mit einem Zielpad (19-20) durch in den Handschuh (6) integrierte Interaktionsaufgabensensoren (19-20) widergespiegelt wird; und
- eine dedizierte haptische Rückkopplungsstufe (27), in der eine kürzlich erfolgte physische Berührung zwischen mindestens einem kontaktierten Fingerhülsenpad (19) / Zielpad (19-20) / der 3D-Gesamtbewegungserfassungsmittel (21) mit einer haptischen Rückkopplungs-Tastschwingungseingabe (31) widergespiegelt wird, wobei die haptische Rückkopplungs-Tastschwingungseingabe (31) zu einem entsprechenden Abschnitt des Handschuhs (6) an dem Fingerhülsenpad / Zielpad angeordnet ist, indem mindestens eine der beiden sich berührenden Fingerhülsen eine darin integrierte haptische Rückkopplungskomponente (27) aufweist, wobei die dedizierte haptische Rückkopplungsstufe (27) mindestens teilweise mindestens eine der folgenden Sinneseingaben eines menschlichen Bedieners für das Flugzeugsimulationsmodell (1) bestätigt:
Auswählen, Abwählen, Hervorheben, Vergrößern und Manipulieren von mindestens einem der simulierten Objekte (40) auf der visuellen Anzeige (8).

2. Verfahren nach Anspruch 1,
**dadurch gekennzeichnet, dass** die 3D-Gesamtortsempfindlichkeitseingabe (29) zumindest teilweise mindestens eine der folgenden Sinneseingaben eines menschlichen Bedieners für das Flugzeugsimulationsmodell (1) widerspiegelt:
Auswählen, Abwählen, Hervorheben, Vergrößern und Manipulieren von mindestens einem der simulierten Objekte (40) auf der visuellen Anzeige (8).

3. Verfahren nach Anspruch 1,
**dadurch gekennzeichnet, dass** die Finger-zu-Ziel-berührungsempfindliche Eingabe (30) mindestens teilweise mindestens eine der folgenden auf einen Sinneseingaben eines menschlichen Bedieners für das Flugzeugsimulationsmodell (1) widerspiegelt: Auswählen, Abwählen, Hervorheben, Vergrößern und Manipulieren von mindestens einem der simulierten Objekte (40) auf der visuellen Anzeige (8), die mindestens einen Bildschirm (25) eines Desktop-/Laptop-Computers umfasst.

4. Verfahren nach Anspruch 1,
**dadurch gekennzeichnet, dass** die Finger-zu-Ziel-berührungsempfindliche Eingabe (30) einen mehrfachen Kontakt, z.B. einen doppelten schnell aufeinanderfolgenden Kontakt (38), zwischen kontaktiertem Fingerhülsenpolster (19) / Zielpolster (19-20) widerspiegelt.

5. Verfahren nach Anspruch 1,
**dadurch gekennzeichnet, dass** der mit der Hand tragbare Handschuh eine Daumen-Fingerhülse (15), die von einem Daumen des menschlichen Bedieners (5) getragen wird, und mindestens zwei gegenüberliegende Fingerhülsen (16), die von den gegenüberlegbaren Fingern des menschlichen Bedieners (5) getragen werden, umfasst, und dass die Finger-zu-Ziel-berührungsempfindliche Eingabe (30) den Kontakt zwischen einem in die Daumen-Fingerhülse (15) integrierten Daumenkontaktpad (19) und mindestens einem in die gegenüberliegenden Fingerhülsen (16) integrierten gegenüberliegenden Kontaktpad (19) widerspiegelt.

6. Verfahren nach Anspruch 1,
**dadurch gekennzeichnet, dass** der Handschuh (6) mindestens einen Handflächenabschnitt (17) mit einem Zielkontaktpad (20) aufweist, der in eine Handflächenseite (17) des Handschuhs (6) integriert ist, und dass die Finger-zu-Ziel-berührungsempfindliche Eingabe (30) den Kontakt zwischen mindestens einem Fingerhülsen-(15-16)-Kontaktpad (19), das in die entsprechende(n) Fingerhülse(n) integriert ist, und dem Handflächenkontaktpad (20) widerspiegelt.

7. Verfahren nach Anspruch 1,
**dadurch gekennzeichnet, dass** in einer Finger-zu-Ziel-Interaktionsstufe (19) ein Zeigefinger verwendet wird, um ein oder mehrere simulierte Objekte (40) auszuwählen, die mindestens ein Bedienfeld / Armaturenbrett nachbilden, so dass, wenn ein 3D-Gesamtbewegungserfassungsmittel (21) auf der Zeigefingerhülse mit dem simulierten Objekt (40) kollidiert, eine dedizierte haptische Rückkopplungsstufe (27) eine taktile Vibration beinhaltet.

8. Verfahren nach Anspruch 1,
**dadurch gekennzeichnet, dass** eine Kombination aus einer Finger-zu-Ziel-Interaktionsstufe (19) mit einer dedizierten 3D-Gesamtbewegungserfassungsstufe (21) erreicht wird, wobei eine Faustinteraktionsaktion angeordnet wird, indem ein sogenannter Schließhandkontakt zwischen mindestens einem Fingerhülsenpad (19) zusammen mit einem Handflächenpad (20) aufrechterhalten wird, und eine ortsempfindliche 3D-Eingabe (30) die Bewegung von mindestens einem simulierten Objekt (40) in dem statischen 3D-Orientierungspunkt widerspiegelt.

9. Verfahren nach Anspruch 1,
**dadurch gekennzeichnet, dass** eine dedizierte 3D-Gesamtbewegungserfassungsstufe (21) einen Filterschritt (49) umfasst, der Eingaben (29) aufgrund subtiler Bewegungen des Handschuhs (6) mit einer Amplitude, die geringer ist als ein vorbestimmter minimaler Abstandswert, unterdrückt.

10. Verfahren nach Anspruch 1,
**dadurch gekennzeichnet, dass** eine dedizierte haptische Rückkopplungsstufe (27) beendet wird, wenn ein Kontakt zwischen einem vorgegebenen Finger-/Zielpad (19-2) unterbrochen wird, wodurch die Beendigung einer Finger-zu-Ziel-Interaktionsstufe (19) angezeigt wird, mit der die dedizierte haptische Rückkopplungsstufe (27) kombiniert war.

11. Verfahren nach Anspruch 1,
**dadurch gekennzeichnet, dass**:
- eine erste dedizierte 3D-Gesamtbewegungserfassungsstufe (21) eine Vorauswahl eines simulierten Objekts (40) bewirkt,
- eine Finger-zu-Ziel-Interaktionsphase (19) die Auswahl der Validierung dieses simulierten Objekts (40) bewirkt, während
- eine weitere dedizierte 3D-Gesamtbewegungserfassungsstufe (21) die Steuerung dieses simulierten Objekts (40) gemäß vorbestimmter Bewegungen des Handschuhs (6) in Bezug auf den statischen 3D-Orientierungspunkt (XYZ) bewirkt, wobei die Validierung der Vorauswahl und Auswahl trotz der weiteren, für die 3D-Gesamtbewegungserfassung vorgesehenen Stufe rechtzeitig aufrechterhalten wird, selbst wenn die vorgegebenen Bewegungen des Handschuhs (6) mit dem Simulationsobjekt (40) nicht mehr übereinstimmen, aber solange die Auswahl über die Finger-Ziel-Interaktionsstufe (19) beibehalten wird.

12. Flugzeugsimulationsmodell (1), das eine Mensch-Maschine-Schnittstelle (2) in einem Flugzeug (A), insbesondere einem Hubschrauber, virtuell nachbildet, um praktische Übungen in Bezug auf für das spezielle Flugzeug (A) vorgesehene Notfallprozeduren durchzuführen, wobei das Flugzeugsimulationsmodell (1) mindestens umfasst:
- einen Computer (3) mit einem Prozessor (11), ein nichtflüchtiges computerlesbares Medium (10), das Computerbefehle enthält, wobei die Computerbefehle, wenn sie ausgeführt werden, den Prozessor (11) des Computers (3) veranlassen, automatisch Operationen durchzuführen, die die Mensch-Maschine-Schnittstelle (2) nachbilden, einen menschlichen Bediener-Avatar (5) in der nachgebildeten Mensch-Maschine-Schnittstelle (2) anzeigen, und die Lande-/Flugumgebung (26) des speziellen Flugzeugs (A) anzeigen, wobei die Mensch-Maschine-Schnittstelle (2) ein Cockpit des speziellen Flugzeugs (A) mit einer Mehrzahl von simulierten Objekten (40) zeigt, die mindestens ein Bedienfeld (41), Tasten (42), Knöpfe (43), Griffe (44), Pedale (45) und Schalter (46) umfassen;
- ein Befehls- und Sinnesrückkopplungssystem (4), das funktionell mit mindestens einem Körperorgan eines menschlichen Bedieners (5) des Flugzeugsimulationsmodells (1) gekoppelt ist und auch mit dem Computer (3) gekoppelt ist, um von dem menschlichen Bediener (5) Sinneseingaben für das Flugzeugsimulationsmodell (1) zu sammeln und auch Betriebsinformationen des Flugzeugsimulationsmodells (1) dem menschlichen Bediener anzuzeigen;
- wobei das Befehls- und Sinnesrückkopplungssystem (4) mindestens ausgestattet ist mit:
- einem mit einer Hand tragbaren Handschuh (6) mit Fingerhülsen und Interaktionsaufgabensensor (19-20) und 3D-Gesamtbewegungserfassungsmitteln (21), die bündig mit dem Handschuh (6) angeordnet sind, um die Verfolgung von Bewegungen des tragbaren Handschuhs relativ zu einem statischen 3D-Orientierungspunkt (XYZ) zu ermöglichen, wobei mindestens ein Hülsenpad (19) / Zielpad (19-20), das Berührungsinteraktionsaufgabensensoren bildet, in den Handschuh (6) integriert ist, und wobei eine Mehrzahl von haptischen Rückkopplungskomponenten (27) in den Handschuh (6) integriert ist, wobei die haptischen Rückkopplungskomponenten (27) es dem Handschuh (6) ermöglichen, eine taktile Vibration widerzuspiegeln;
- eine visuelle Anzeige (8), die in der Lage ist, die simulierten Objekte (40) der nachgebildeten Mensch-Maschine-Schnittstelle (2) zu zeigen, so dass die simulierten Objekte während des Betriebs des Flugzeugsimulationsmodells (1) über den Handschuh (6) virtuell manipuliert werden können;
**dadurch gekennzeichnet, dass** das Flugzeugsimulationsmodell (1) konfiguriert ist, um das Verfahren nach mindestens einem der Ansprüche 1 bis 11 durchzuführen.

13. Flugzeugsimulationsmodell (1) nach Anspruch 12, bei dem:
- das mindestens eine 3D-Gesamtbewegungserfassungsmittel (21) LEDs umfasst, die von einem LED-Positionsempfänger (22) anvisiert werden sollen, der logisch mit dem Computer (3) gekoppelt ist, und/oder
- die mindestens eine haptische Rückkopplungskomponente (27) zu der Gruppe gehört, die umfasst: einen Mikromotor, ein Nanoobjekt oder ein MEM, das an und/oder in den Handschuh (6) integriert ist; und/oder
- das mindestens eine Hülsenpad (19) / Zielpad (19-20) ein elektrisch leitfähiger Bereich ist, der bündig in den Handschuh (6) integriert ist.

## Revendications

1. Méthode d'exploitation d'une modélisation de simulateur d'aéronef (1) reproduisant de façon virtuelle une interface homme-machine (2) dans un aéronef (A) spécifié, plus particulièrement un hélicoptère, afin d'effectuer des sessions d'apprentissage pratiques en rapport avec des procédures d'urgence qui sont prévues pour l'aéronef (A) spécifié, ladite modélisation de simulateur d'aéronef (1) incluant au moins :
- un ordinateur (3) avec un processeur (11), un support non-transitoire lisible sur ordinateur (10) contenant des commandes informatisées, lesdites commandes informatisées, lorsqu'elles sont exécutées, conduisant le processeur (11) de l'ordinateur (3) à effectuer automatiquement des opérations reproduisant celles de ladite interface homme-machine (2), affichant un avatar d'opérateur humain (5) dans l'interface homme-machine (2) répliquée, et affichant les environnements de vol / d'atterrissage (26) de l'aéronef (A) spécifié, ladite interface homme-machine (2) répliquée représentant un poste de pilotage de l'aéronef (A) spécifié avec une pluralité d'objets simulés (40) comprenant au moins un panneau (41), des boutons (42), des sélecteurs (43), des poignées (44), des pédales (45) et des interrupteurs (46) ;
- un système d'instructions à retour sensoriel (4) couplé de façon fonctionnelle à au moins un organe corporel d'un opérateur humain (5) de la modélisation de simulateur d'aéronef (1), et également couplé audit ordinateur (3), afin de recueillir de l'opérateur humain, des entrées sensorielles destinées à la modélisation de simulateur d'aéronef (1) et de donner également des informations de fonctionnement de la modélisation de simulateur d'aéronef (1) audit opérateur humain ; ledit système d'instructions à retour sensoriel (4) étant équipé d'au moins :
- un gant apte à être enfilé sur la main (6) avec des manchons de doigt et un capteur de tâche d'interaction (19-20) et des moyens de détection de mouvement d'ensemble en 3D (21), aménagés à fleur du gant (6) afin de permettre de poursuivre les déplacements dudit gant portable par rapport à un repère 3D statique (XYZ).
- un afficheur visuel (8) capable de représenter les objets simulés (40) de la réplique d'interface homme-machine (2), afin de permettre la manipulation virtuelle via le gant (6) desdits objets simulés lors du fonctionnement de la modélisation de simulateur d'aéronef (1) ;
ledit procédé exécutant automatiquement les opérations suivantes afin de permettre à l'opérateur humain d'effectuer des sessions d'apprentissage pratiques en rapport avec les procédures d'urgence qui sont prévues pour l'aéronef (A) spécifié :
- une phase de détection de mouvement d'ensemble en 3D (21) configurée pour permettre l'exécution d'une action liée aux procédures d'urgence qui sont prévues pour l'aéronef (A) spécifié, dans laquelle une entrée sensorielle de localisation d'ensemble en 3D (29) reflète une position instantanée du gant (6), ladite entrée sensorielle de localisation d'ensemble en 3D (29) étant transmise à l'ordinateur grâce au système d'instructions à retour sensoriel (4), dans lequel l'avatar d'un opérateur humain (5) est affiché sur l'afficheur visuel (8) afin de visualiser la position instantanée du gant (6) dans la réplique de l'interface homme-machine (2), et dans lequel la phase de détection de mouvement d'ensemble en 3D (21) spécifique comprend le traitement d'une entrée de grossissement de l'affichage pour grossir au moins un objet simulé (40) sélectionné tel que visualisé sur l'afficheur visuel (8) ;
- une phase d'interaction entre doigt et cible (19) configurée pour permettre l'exécution d'une action liée aux procédures d'urgence qui sont prévues pour l'aéronef (A) spécifié dans laquelle une entrée de contact sensoriel doigt-à-doigt (30) reflète un toucher physique récent entre au moins un coussinet de manchon de doigt de contact (19) et une pluralité de coussinets cibles (19-20) formant des capteurs de tâche d'interaction (19-20), le toucher physique récent entre au moins un coussinet de manchon de doigt de contact (19) et un coussinet cible (19-20) étant reflété par les capteurs de tâche d'interaction (19-20) intégrés au gant (6) ; et
- une phase de retour haptique (27) spécifique, dans laquelle un toucher physique récent entre au moins les coussinets de manchons de doigt de contact (19) / le coussinet cible (19-20) / les moyens de détection de mouvement d'ensemble en 3D (21) est reflété par une entrée de vibration tactile de retour haptique (31), l'entrée de vibration tactile de retour haptique (31) vers une partie correspondante du gant (6) étant située sur ledit coussinet de manchon de doigt / coussinet cible, grâce à au moins un desdits deux manchons de doigt de contact ayant un composant de retour haptique (27) intégré à l'intérieur, dans lequel la phase de retour haptique (27) spécifique confirme au moins en partie au moins une des entrées sensorielles de l'opérateur humain suivantes, pour la modélisation de simulateur d'aéronef (1) : la sélection, la désélection, la mise en surbrillance, le grossissement et la manipulation d'au moins un desdits objets simulés (40) sur l'afficheur visuel (8).

2. Procédé selon la revendication 1,
**caractérisé en ce que** ladite entrée sensorielle de localisation d'ensemble en 3D (29) reflète au moins en partie une des entrées sensorielles de l'opérateur humain suivantes pour la modélisation de simulateur d'aéronef (1) : la sélection, la désélection, la mise en surbrillance, le grossissement et la manipulation d'au moins un desdits objets simulés (40) sur l'afficheur visuel (8).

3. Procédé selon la revendication 1,
**caractérisé en ce que** ladite entrée de contact sensoriel doigt sur cible (30) reflète au moins en partie au moins une des entrées sensorielles de l'opérateur humain suivantes pour la modélisation de simulateur d'aéronef (1) : la sélection, la désélection, la mise en surbrillance, le grossissement et la manipulation d'au moins un desdits objets simulés (40) sur l'afficheur visuel (8) qui inclut au moins un écran d'ordinateur de bureau ou portable (25).

4. Procédé selon la revendication 1,
**caractérisé en ce que** ladite entrée de contact sensoriel doigt sur cible (30) reflète un contact multiple, par exemple deux contacts successifs rapides (38) entre les coussinets de manchon de doigt de contact (19) et les coussinets cibles (19-20).

5. Procédé selon la revendication 1,
**caractérisé en ce que** le gant portable sur la main inclut un manchon de pouce (15) à enfiler sur un pouce de l'opérateur humain (5) et au moins deux manchons de doigt opposés (16) à enfiler sur des doigts opposables de l'opérateur humain (5), et **en ce que** ladite entrée sensorielle de contact doigt sur cible (30) reflète le contact entre un coussinet de contact de pouce (19) intégré au manchon de pouce (15) et au moins un coussinet de contact opposé (19) intégré aux manchons de doigts opposés (16).

6. Procédé selon la revendication 1,
**caractérisé en ce que** le gant (6) inclut au moins une partie de paume (17) avec un coussinet de contact cible (20) intégré à un côté paume (17) du gant (6), et **en ce que** ladite entrée sensorielle de contact doigt sur cible (30) reflète le contact entre au moins un coussinet de contact (19) de manchon de doigt (15-16) intégré au(x) manchon(s) de doigt correspondant(s) et ledit coussinet de contact de paume (20).

7. Procédé selon la revendication 1,
**caractérisé en ce que** lors d'une phase d'interaction entre doigt et cible (19), un index est utilisé pour sélectionner un ou une pluralité d'objets simulés (40) reproduisant au moins un panneau de commandes / une planche de bord de façon que lorsqu'un moyen de détection de mouvement d'ensemble en 3D (21) sur le manchon d'index rencontre ledit objet simulé (40), une phase de retour haptique (27) spécifique entraine une vibration tactile.

8. Procédé selon la revendication 1,
**caractérisé en ce qu'**une combinaison de phase d'interaction entre doigt et cible (19) avec une phase de détection de mouvement d'ensemble en 3D (21) spécifique est exécutée, avec une action d'interaction de poing commandée en maintenant un contact poing fermé fictif entre au moins un coussinet de manchon de doigt (19) avec un coussinet de paume (20), et une entrée sensorielle de localisation en 3D (30) reflétant le déplacement dans ledit repère 3D statique d'au moins un objet simulé (40).

9. Procédé selon la revendication 1,
**caractérisé en ce qu'**une phase de détection de mouvement d'ensemble en 3D (21) spécifique implique une étape filtre (49) qui inhibe les entrées (29) causées par de subtils déplacements du gant (6) d'une amplitude inférieure à une valeur de distance minimale prédéterminée.

10. Procédé selon la revendication 1,
**caractérisé en ce qu'**une phase de retour haptique (27) spécifique se termine lorsqu'un contact entre un coussinet de doigt et de cible (19-20) prédéterminé est interrompu, indiquant ainsi l'achèvement d'une phase d'interaction doigt vers cible (19) à laquelle ladite phase de retour haptique (27) spécifique était combinée.

11. Procédé selon la revendication 1,
**caractérisé en ce que** :
- une première phase de détection de mouvement d'ensemble en 3D (21) spécifique entraine la pré-sélection d'un objet simulé (40),
- une phase d'interaction entre doigt et cible (19) entraine la validation de la sélection de cet objet simulé (40), tandis que
- une nouvelle phase de détection de mouvement d'ensemble en 3D (21) spécifique entraine le contrôle dudit objet simulé (40) selon les déplacements prédéterminés du gant (6) par rapport à un repère 3D statique (XYZ),
ladite validation de pré-sélection et de sélection étant maintenue dans le temps malgré la nouvelle phase de détection de mouvement d'ensemble en 3D spécifique, même si lesdits déplacements prédéterminés du gant (6) cessent d'être en rapport avec l'objet simulé (40) tant que la sélection via ladite phase d'interaction entre doigt et cible (19) est maintenue.

12. Modélisation de simulateur d'aéronef (1), reproduisant de façon virtuelle une interface homme-machine (2) dans un aéronef (A), plus particulièrement un hélicoptère, pour effectuer des sessions d'apprentissage pratiques en rapport avec des procédures d'urgence qui sont prévues pour l'aéronef (A) spécifié,
ladite modélisation de simulateur d'aéronef (1) incluant au moins :
- un ordinateur (3) avec un processeur (11), un support non-transitoire lisible sur ordinateur (10) contenant des commandes informatisées, lesdites commandes informatisées, lorsqu'elles sont exécutées, conduisant le processeur (11) de l'ordinateur (3) à effectuer automatiquement des opérations reproduisant celles de ladite interface homme-machine (2) affichant l'avatar d'un opérateur humain (5) dans la réplique d'interface homme-machine (2), et affichant les environnements de vol / d'atterrissage (26) de l'aéronef (A) spécifié, ladite interface homme-machine (2) représentant un poste de pilotage de l'aéronef (A) spécifié ayant une pluralité d'objets simulés (40) comprenant au moins un panneau (41), des boutons (42), des sélecteurs (43), des poignées (44), des pédales (45) et des interrupteurs (46) ;
- un système d'instructions à retour sensoriel (4) couplé de façon fonctionnelle à au moins un organe corporel d'un opérateur humain (5) de la modélisation de simulateur d'aéronef (1), et également couplé audit ordinateur (3), afin de recueillir de l'opérateur humain (5) des entrées sensorielles destinées à la modélisation de simulateur d'aéronef (1) et également à donner des informations de fonctionnement de la modélisation de simulateur d'aéronef (1) audit opérateur humain ;
- ledit système d'instructions à retour sensoriel (4) étant équipé d'au moins :
- un gant portable sur la main (6) avec des manchons de doigt et un capteur de tâche d'interaction (19-20) et des moyens de détection de mouvement d'ensemble en 3D (21), aménagés en affleurement dans le gant (6) afin de permettre de poursuivre les déplacements dudit gant portable par rapport à un repère 3D statique (XYZ), dans lequel au moins un coussinet de manchon (19) / coussinet cible (19-20) formant des capteurs de tâche d'interaction de toucher est intégré au gant (6), et dans lequel une pluralité de composants de retour haptique (27) est intégrée au gant (6), lesdits composants de retour haptique (27) permettant au gant (6) de refléter une vibration tactile ;
- un afficheur visuel (8) capable de représenter les objets simulés (40) de la réplique d'interface homme-machine (2), afin de permettre la manipulation virtuelle via le gant (6) desdits objets simulés lors du fonctionnement de la modélisation de simulateur d'aéronef (1) ;
**caractérisée en ce que** ladite modélisation de simulateur d'aéronef (1) est configurée pour mettre en œuvre le procédé selon au moins une quelconque des revendications 1 à 11.

13. Modélisation de simulateur d'aéronef (1) selon la revendication 12, dans laquelle :
- ledit au moins un moyen de détection de mouvement d'ensemble en 3D (21) comprend des LED qui sont guidées par un récepteur de position de LED (22) couplé de façon logique audit ordinateur (3), et / ou
- ledit au moins un composant de retour haptique (27) fait partie d'un groupe comprenant : un micromoteur, un nano-objet ou un microsystème électromécanique (MEM), intégré au gant (6) et / ou à l'intérieur du gant (6) ; et / ou
- ledit au moins un coussinet de manchon (19) / coussinet cible (19-20) est une zone électroconductrice intégrée à fleur du gant (6).
